# EUROPÄISCHE PATENTSCHRIFT

(11) **EP 2 503 199 B1**
(45) Veröffentlichungstag und Bekanntmachung des Hinweises auf die Patenterteilung: **28.09.2016**
(21) Anmeldenummer: 11002298.5
(22) Anmeldetag: 21.03.2011
(51) Int. Cl.: F16J 13/24, H01M 2/12, H05K 5/02

(54) **Druckausgleichsvorrichtung mit Filterfunktion für Gehäuse mit einem Totvolumen**
Pressure equalisation device with filter function for housing with a dead volume
Dispositif d'égalisation de pression doté d'une fonction de filtrage pour boîtier doté d'un volume mort

(43) Veröffentlichungstag der Anmeldung: 26.09.2012
(73) Patentinhaber: Carl Freudenberg KG, 69469 Weinheim (DE)
(72) Erfinder: Kritzer, Peter, 67147 Forst (DE); Kramer, Thomas, 64668 Rimbach (DE); Boggasch, Mark, 69514 Laudenbach (DE); Nahrwold, Olaf, 67071 Ludwigshafen (DE); Klenk, Thomas, 69221 Dossenheim (DE); Vondung, Jörg, 69121 Heidelberg (DE); Schreiner, Marcel, 68259 Mannheim (DE)

(56) Entgegenhaltungen:
- US-A- 3 909 302

## Beschreibung

### Technisches Gebiet

**Die vorliegende Erfindung betrifft eine Druckausgleichsvorrichtung gemäß dem Oberbegriff des Patentanspruchs** 1.

### Stand der Technik

**Die** US 3,909,302 **zeigt eine Druckausgleichsvorrichtung mit einer mikroporösen Folie aus Polytetraflourethylen.**

Großformatige Batterie-Systeme bzw. andere elektrochemische Speicher, wie beispielsweise Superkondensatoren, finden in immer mehr Applikationen Verwendung. Sie werden beispielsweise in Elektrofahrzeugen oder Hybridfahrzeugen, in industriellen Traktionssystemen, wie Gabelstaplern oder Robotem, in Flurförderfahrzeugen sowie in Sport- und Freizeit-Fahrzeugen eingesetzt. Weitere Anwendungen können sich in Bahnen und Flugzeugen finden lassen. Anwendungen als Back-up-Systeme bzw. als Systeme zur Energie-Zwischenspeicherung bei Verwendung von alternativen Energiequellen sind ebenfalls denkbar. Großformatige Batterie-/ Superkondensator-Systeme, wie sie beispielsweise in Elektrofahrzeugen Verwendung finden, können derzeit aus hundert bis über tausend Einzelzellen aufgebaut sein.

Diese Einzelzellen werden meist zu sog. Modulen von ca.10 - 20 Zellen zusammengefasst und in einem Gehäuse platziert. Dabei können die Einzelzellen selbst mit einem festen Zellgehäuse als Rundzellen oder als prismatische Zellen ausgebildet sein oder im Falle von Pouch-Zellen oder Coffee-bag-Zellen ein flexibles Foliengehäuse aufweisen. Dabei sind derzeit die Einzelzellen bevorzugt in sich hermetisch abgeschirmt.

Sind nun mehrere dieser Einzelzellen in einem Gehäuse platziert, so ist es vorteilhaft, diese zu einem Batteriesystem zusammengefassten Einzelzellen zu kühlen, da sich die Einzelwärmen der Einzelzellen in dem Gehäuse bis hin zu einer Überhitzung addieren können. Üblicherweise wird derzeit eine Kontaktkühlung bevorzugt, wobei die Kontaktkühlung entweder als druckloses System, enthaltend wasserbasierte Medien, oder auch als Klimaanlagen auf Basis von Fluorkohlenwasserstoffen bzw. Kohlendioxid ausgeführt sein kann.

Derzeit übliche Batterievolumen von derartigen Gehäusen betragen in der Regel mehr als 20 l. Bei Modulen für Elektrofahrzeuge können derzeit sogar über 100 lauftreten. Werden nun die Einzelzellen in einem Gehäuse platziert, so wird in dem Batteriegehäuse ein unvermeidbares Totvolumen von ca. 5 - 20 % des Batterievolumens auftreten. Je nach Ausführung der Zellen kann dieses Totvolumen sogar noch wesentlich erhöht sein. Vor allem bei der Nutzung von geometrisch ungünstigen Rundzellen ergibt sich eine relativ geringe Raumnutzung, sodass in diesem Falle auch Totvolumina von 50 % auftreten können.

Würde man nun das Gehäuse hermetisch abgeschlossen ausbilden, so könnten, beispielsweise hervorgerufen durch Temperaturschwankungen durch Berg- und Talfahrten, durch atmosphärische Luftdruckschwankungen, bei Transportvorgängen oder bei Einfahrten in Tunnel, Druckschwankungen auftreten, die zu leichten Überdrücken oder Unterdrücken in dem Gehäuse führen können. Diese auftretenden Druckschwankungen in dem Gehäuse sind, insbesondere hinsichtlich der Abdichtung der Einzelzellen, unerwünscht, da sie die Lebensdauer der Einzelzellen negativ beeinflussen können.

Eine mögliche Lösung dieses Problems liegt in dem Ausgießen des Totvolumens beispielsweise durch eine Silikon-Vergussmasse. Nachteilig daran ist jedoch, dass die Vergussmasse das Gewicht bzw. die Masse des Gesamtbatteriesystems wesentlich erhöht. Somit kommt das Verfüllen des Totvolumens nur bei relativ kleinen Batterien oder Modulen zum Einsatz, da bei großen Modulen, beispielsweise für reine Elektrofahrzeuge, dies zu einer nicht mehr tolerierbaren Massenzunahme des Batteriesystems führt. Zudem ist eine derartige nahezu totvolumenfreie Ausgestaltung des Gehäuses im Störfall äußerst kritisch einzuschätzen.

Bei beispielsweise einer Zellkapazität von 40 Ah können üblicherweise Gasvolumina von 100 l freigesetzt werden. Aufgrund eines fehlenden Totvolumens kann, da sich das entstehende Gas nur unzureichend ausbreiten kann, ein hoher, plötzlicher Druckanstieg von ggf. mehreren 100 bar auftreten, der zu einem explosionsartigen Bersten des Gehäuses führen kann. Schon aus diesem Grund ist eine vollständige Verfüllung des Totvolumens des Gehäuses nicht vorteilhaft und auch nicht eine hermetisch abgeschlossene, isochore Ausbildung des Gehäuses, da auch bei Nichterfüllung des Totvolumens ein Entstehen von Gasen im Störfall ebenfalls zu einer Zerstörung eines hermetisch abgeschlossenen Gehäuses führen kann.

Wird das Totvolumen nicht mit festen bzw, flüssigen Substanzen aufgefüllt und wird das Gehäuse nicht hermetisch abgeschlossen ausgebildet, so kann durch Temperatur- oder Druckschwankungen ein Volumenaustausch mit der Umgebung stattfinden. Beispielsweise wird beim Abkühlen des Batteriesystems Luft in das Gehäuse eingesaugt werden, während beim Anfahren oder Starten des Automobils - entsprechend der Nutzung der Batterie - sukzessive Luft aus dem Gehäuse herausgedrückt wird.

Bei allen Einsaugvorgängen, insbesondere beim Abkühlen oder bei Talfahrten, können mit der eingesaugten Luft sowohl Feuchtigkeit als auch Staub, Öltröpfchen / Öldämpfe oder auch saure Gase wie Chlorwasserstoff oder Schwefeldioxide in den Gehäuseinnenraum gelangen. Auch wenn davon auszugehen ist, dass die ausgetauschten Luftvolumina relativ gering sind, so ist eine Ansammlung von Feuchtigkeit im Inneren der Batterie äußerst unerwünscht, da die Feuchtigkeit kondensieren kann und eine damit einhergehende Wasseranreicherung im Inneren des Batteriegehäuses zu Kurzschlüssen und Korrosion führen kann. Dies ist insbesondere dann nachteilig, wenn die Kühlung der Zellen über deren Stromableiter erfolgt.

Derzeit wird versucht, das Eindringen von Feuchtigkeit in den Gehäuseinnenraum dadurch zu unterbinden, dass in die Belüftungsöffnungen des Gehäuses atmungsaktive Wasserblockelemente eingesetzt werden. Als solche atmungsaktiven Wasserblockelemente können beispielsweise die aus der Funktionskleidung bekannten, mikroporösen Gore-Tex-Membranen mit einem üblichen maximalen Porendurchmesser von deutlich unter 1 µm eingesetzt werden. Diese atmungsaktiven Wasserblockelemente bieten einen exzellenten Schutz gegenüber Wasser, lassen jedoch Wasserdampf passieren, der dann in das Innere des Batterlegehäuses gelangen und dort kondensieren kann. Einmal in das Batteriegehäuse gelangtes Kondensat gelangt jedoch nicht wieder durch die Membran nach außen, da üblicherweise im Gehäuseinnenraum Temperaturen vorherrschen, die nicht dazu geeignet sind, das Kondensat in nennenswertem Umfang in den gasförmigen Zustand zu überführen. Somit können sich in dem Gehäuse Kondensatmengen von bis zu 100 ml pro Jahr ansammeln.

Dieses Wasser muss dann im Gehäuse beispielsweise mit Hilfe von wasserbindenden Substanzen wie Trockenmitteln oder auch Superabsorbem fixiert werden. Alternativ besteht die Möglichkeit der Detektion des Kondensats sowie dessen Abführung aus dem Batteriegehäuse, z. B. mit Hilfe von Ventilen oder auch Pumpen. Somit kann mit derartigen atmungsaktiven Wasserblockelementen zwar ein direktes Eindringen von Wasser in den Gehäuseinnenraum verhindert werden, jedoch aufgrund der Wasserdampfdurchlässigkeit dieser Wasserblockelemente ist eine Ansammlung von Kondensat im Gehäuseinnenraum nicht unterbindbar.

Des Weiteren sind derartige atmungsaktive Wasserblockelemente aus mikroporösen Membranen anfällig gegenüber partikulärer Verschmutzung. Da die mikroporösen Membranen üblicherweise einen maximalen Porendurchmesser von deutlich unter 1 µm aufweisen und geogen erzeugte Schmutzpartikel üblicherweise Partikelgrößen von größer als 3 µm, werden Schmutzpartikel lediglich auf der Oberfläche der mikroporösen Membran abgeschieden.

Diese ausschließliche Oberflächenbeladung führt zu einer relativ geringen Filtereffizienz und zudem zu einer geringe Standzeit Des Weiteren sind mikroporöse Membranen anfällig gegenüber lipophilen Substanzen, wie beispielsweise Ölen. Da Öle allgegenwärtig in technischen Systemen vorhanden sind, gelangen sie auch auf die Oberfläche von solchen mikroporösen Membranen und lagern sich in den feinen Poren ab. Aufgrund von Kapillareffekten ist dabei ein Ausspülen bzw. Ausblasen der Öle, einmal eingelagert, nicht mehr möglich. Dies führt dazu, dass die Atmungsaktivität der mikroporösen Membran verringert bzw. verloren geht. Zudem besetzen mikroporöse Membranen generell eine sehr geringe Luftdurchlässigkeit.

Demzufolge muss beim Einsatz von mikroporösen Membranen in Gehäusen darauf geachtet werden, dass bei einem großen Totvolumen die mikroporöse Membran eine relativ große, funktionell wirksame Querschnittsfläche aufweist. Eine groß Querschnittsfläche ist jedoch hinsichtlich einer möglichen mechanischen Beschädigung nachteilig. Hinsichtlich einer möglichen Beschädigung weisen mikroporöse Membranen weitere Nachteile auf. So zeichnen sie sich durch eine geringe Penetrationsfestigkeit und eine geringe Weiterreiß-Festigkeit bei bereits eingetretener Beschädigung aus.

### Darstellung der Erfindung

Die vorliegende Erfindung beschäftigt sich demzufolge mit der Aufgabe, für eine Druckausgleichsvorrichtung eine verbesserte oder zumindest eine alternative Ausführungsform anzugeben, die sich insbesondere durch eine verbesserte Filterfunktion und eine geringere Anfälligkeit gegenüber Ölkontamination und mechanischer Beschädigung auszeichnet.

Erfindungsgemäß wird diese Aufgabe durch die Gegenstände des unabhängigen Anspruchs gelöst. Vorteilhafte Ausführungsformen sind Gegenstand der abhängigen Ansprüche.

Als ein Aspekt der Erfindung wird eine Druckausgleichsvorrichtung für ein ein Totvolumen aufweisendes Gehäuse, insbesondere einer elektrochemischen Stromquelle, mit zumindest einem offenporigen Element vorgeschlagen. Dabei weist das offenporige Element einen mittleren Porendurchmesser von 2 bis 100 µm auf. Insbesondere ist auch ein mittlerer Porendurchmesser von 3 bis 80 µm, ggf. von 4 bis 60 µm und bevorzugt von 5 bis 50 µm denkbar. Ein Kerngedanke der Erfindung ist somit die Verwendung von zumindest einem offenporigen Element als Druckausgleichselement in einem Gehäuse.

Vorteilhaft kann durch eine derartige Druckausgleichsvorrichtung bzw. durch ein offenporiges Element ein evtl. in dem Gehäuseinnenraum zum umgebenden Außenraum des Gehäuses auftretende Druckunterschied über die Druckausgleichsvorrichtung ausgeglichen werden. Somit kann mittels einer Druckausgleichsvorrichtung eine Zerstörung oder Beschädigung des Gehäuses bei auftretenden Druckdifferenzen zwischen Gehäuseinnenraum und dem umgebenden Außenraum verhindert bzw. verringert werden.

Zudem kann durch Anbringung eines Druckausgleichselementes die mechanische Auslegung des Gehäuses einfacher erfolgen, da die Druckdifferenzen an sich nicht hoch sein können. So kann z.B. die Wandstärke des Gehäuses reduziert sein und dadurch Gewicht eingespart werden.

Aufgrund des relativ groß gestalteten mittleren Porendurchmessers von zumindest 2 bis 100 µm ist zudem eine derartige Druckausgleichsvorrichtung weniger anfällig gegenüber partikulärer Verschmutzung. Da in die Druckausgleichsvorrichtung bzw. in das offenporige Element aufgrund des relativ großen mittleren Porendurchmessers Schmutzpartikel zwar in die Struktur eindringen, aber nicht durch sie hindurch gelangen können, wird ein Tiefenfiltereffekt erzielt, der in eine deutlich erhöhte Resistenz gegenüber partikulärer Verschmutzung mündet.

Somit kann auch bei starker Beladung der Druckausgleichsvorrichtung durch Schmutzpartikel ein Gasaustausch sichergestellt werden, während beispielsweise bei mikroporösen Membranen, bei einer vergleichbaren Belastung mit Schmutzpartikeln, deren Oberfläche bereits nahezu abdichtend mit den Schmutzpartikeln besetzt ist. Somit zeichnen sich derartige Druckausgleichsvorrichtungen mit dementsprechenden offenporigen Elementen durch eine erheblich erhöhte Standzeit aus.

Außerdem zeichnen sich derartige Druckausgleichsvorrichtungen aufgrund des relativ großen mittleren Porendurchmessers ihres zumindest einen offenporigen Elementes durch eine hohe Atmungsaktivität aus. Dabei ist unter Atmungsaktivität die Luftdurchlässigkeit je Querschnittsfläche zu verstehen. Aufgrund der hohen Atmungsaktivität kann die Querschnittsfläche demzufolge relativ klein gehalten werden, sodass aufgrund einer geringen mechanischen Belastungsfläche demzufolge auch eine Verietzungs- bzw. Beschädigungsgefahr des Druckausgleichselementes bzw. des offenporigen Elementes deutlich verringert werden kann.

Zudem kann aufgrund der hohen Atmungsaktivität die Dicke des offenporigen Elementes so gewählt werden, dass ein gegenüber mechanischer Beanspruchung äußerst robustes offenporiges Element dargestellt werden kann.

Weiterhin ist vorteilhaft eine Anfälligkeit der Druckausgleichsvorrichtung gegenüber einer Ölkontamination verbessert, da aufgrund der relativ großen mittleren Porendurchmesser eine Einlagerung von Öl in die Poren und Verstopfung derselben durch das Öl aufgrund eines geringeren Kapillareffektes weniger stark auftritt.

Weiterhin kann das offenporige Element lipophob und/oder hydrophob ausgestaltet sein. Eine derartige Phobie des offenporigen Elementes ist ein weiterer Kerngedanke der Erfindung. Dabei kann die Phobie des offenporigen Elementes durch eine Beschichtung und/oder durch das Elementmaterial selbst erreicht werden.

Da somit das offenporige Element lipophob und/oder hydrophob ausgestaltet sein kann, ist die Druckausgleichsvorrichtung bzw. zumindest ein Druckausgleichselement wasserabstoßend und/oder ölabstoßend ausgebildet, sodass Schlag- oder Spritzwasser und/ oder lipophile Flüssigkeiten, wie beispielsweise Öl, nicht von dem das Gehäuse umgebenden Außenraum in den Gehäuseinnenraum eindringen können. Zudem ist bei einer lipophoben Ausbildung die Beladung mit Schmutzpartikeln verringerbar, da diese, zumal sie üblicherweise einen lipophilen Charakter aufweisen, weniger gut an dem offenporigen Element haften.

Darüber hinaus können angelagerte polare Partikel, wie z.B. Mineralien oder Salze, von abperlendem Wasser weggewaschen werden. Somit kann durch eine derartige Druckausgleichsvorrichtung sichergestellt werden, dass eine Verschmutzung des Gehäuseinnenraums durch Schmutzpartikel, Wasser und/ oder Öl weitestgehend vermieden bzw. verringert werden kann.

Zudem kann das offenporige Element derart lipophob ausgestaltet werden, dass ein Eindringen von Öl in das offenporige Element weitestgehend verringert bzw. verhindert werden kann. Somit kann im Vergleich zu den mikroporösen Membranen ein Festsitzen des Öles in den Poren der mikroporösen Membran aufgrund der Kapillareffekte bei einem offenporigen Element mit relativ großem mittlerem Porendurchmesser und zudem lipophober Ausgestaltung weniger stark auftreten, sodass eine Verstopfung der Druckausgleichsvorrichtung durch eine Ölkontamination weitestgehend verringert bzw. verhindert werden kann.

Ein bekanntes Phänomen für die Anfälligkeit mikroporöse Membranen gegenüber Ölen ist die Anfälligkeit von Funküonskleidung mit z.B. "Gore-Tex"-Membranen gegenüber Weichspülem. Die in den Weichspülem enthaltenen Öle können sich beim Waschen in die Poren der Membranen irreversibel einlagern. Die Atmungsaktivität der Membranen geht dadurch verloren.

Dabei ist unter hydrophob die wasserabweisende Eigenschaft des offenporigen Elementes zu verstehen. Demzufolge ist das offenporige Element, wenn es hydrophob ausgestaltet ist, wasserabweisend und durch Wasser weniger gut benetzbar ausgebildet. Aufgrund dieser wasserabweisenden Ausbildung kann ein Eindringen von Wasser im flüssigen Aggregatzustand in das bzw. durch das offenporige Element weitestgehend verringert bzw. verhindert werden.

Unter lipophob ist die ölabweisende Eigenschaft des offenporigen Elementes zu verstehen, wenn es lipophob ausgebildet ist. Bei einer dementsprechenden lipophoben Ausbildung des offenporigen Elementes ist dasselbe gegenüber Öl, fettartigen Materialien oder lipophilen Flüssigkeiten abweisend ausgebildet. Derartige lipophile Flüssigkeiten, wie beispielsweise Öle, Benzin, Diesel, Schmierfett oder dgl., sind bei einer lipophoben Ausbildung des offenporigen Elementes auch nicht dazu in der Lage, das offenporige Element wesentlich zu benetzen. Somit kann auch ein Eindringen von derartigen lipophilen Flüssigkeiten in das offenporige Element weitestgehend verringert bzw. verhindert werden.

Das offenporige Element kann hydrophob, lipophob oder besonders vorteilhaft hydrophob und lipophob ausgestaltet sein, sodass im letzteren Fall das Eindringen von lipophilen Flüssigkeiten und Wasser in das offenporige Element weitestgehend verringert bzw. verhindert werden kann.

Porosität ist ein Maß für tatsächlich vorliegende Hohlräume in einem Stoff bzw. einem Stoffgemisch und sie stellt das Verhältnis von Hohlraumvolumen zu Gesamtvolumen dar. Dabei kann zwischen einer offenen und einer geschlossenen Porosität unterschieden werden. Bei einer offenen Porosität stehen die Hohlräume miteinander und mit der Umgebung so in Verbindung, dass ein gasförmiger Stoffaustausch erfolgen kann, während bei einer geschlossenen Porosität die einzelnen Hohlräume größtenteils weder miteinander noch mit der Umgebung fluidisch in Verbindung stehen.

Zeichnet sich ein Material durch eine hohe offene Porosität aus, so bezeichnet man es als offenporiges Material. Bei einer reinen geschlossenen Porosität spricht man üblicherweise von einem Schaum. Das offenporige Element ist somit ein Element mit hoher offener Porosität, sodass die einzelnen Poren des offenporigen Elementes untereinander und mit der Umgebung fluidisch in Verbindung stehen. Demzufolge weist das offenporige Element die gewünschte Gasdurchlässigkeit auf, wobei ein durch das offenporige Element durchtretendes Gas die miteinander verbundenen Poren durchströmt.

Der Porendurchmesser eines derartigen offenporigen Elementes kann nach ASTM E 1294 (Coulter Porometrie) bestimmt werden. Dabei ist unter einem mittleren Porendurchmesser der wahrscheinlichste Porendurchmesser in der Porenverteilung zu verstehen.

Um eine derartige Druckausgleichsvorrichtung herzustellen, ist es möglich, das offenporige Element in ein beliebiges Bauteil des Gehäuses zu integrieren. Es ist jedoch auch in einer sehr einfachen Ausführungsform denkbar, ein derartiges offenporiges Element beispielsweise integral und fest verbunden mit einer Gehäusewandung auszubilden. Auch ein austauschbares Einsetzen des offenporigen Elementes in eine Gehäusewand ist denkbar und selbst eine Ausbildung einer gesamten Gehäusewand, beispielsweise des Gehäusedeckels, als offenporiges Element ist möglich.

Des Weiteren kann die Druckausgleichsvorrichtung ein Befestigungselement aufweisen. Vorteilhaft kann nun das offenporige Element mit dem

Befestigungselement fest oder aber auch ablösbar verbunden werden. Nun kann mit Hilfe des Befestigungselementes eine Druckausgleichsvorrichtung umfassend ein offenporiges Element und ein Befestigungselement, in eine Öffnung des Gehäuses eingesetzt werden, sodass eine derartige Druckausgleichsvorrichtung einfach austauschbar ist.

Ist zudem das offenporige Element noch zerstörungsfrei von dem Befestigungselement lösbar, so kann im Falle einer verringerten Funktionalität des offenporigen Elementes dasselbe auch einfach aus dem Befestigungselement herausgelöst und ausgetauscht werden.

Des Weiteren kann das Befestigungselement ein Halteelement aufweisen bzw. aus einem derartigen Halteelement aufgebaut sein.

Dabei übernimmt das Halteelement die Funktion des Haltens des Befestigungselementes In beispielsweise einer Gehäuseöffnung. Zudem kann das Halteelement derartig ausgebildet sein, dass das Befestigungselement einfach aus der Gehäuseöffnung herausgelöst werden kann. Demzufolge kann das Halteelement derartig ausgebildet sein, dass es mittels Verclipsen, Verrasten, Verschrauben, in Art eines Bajonettverschlusses oder dgl. mit einer Gehäuseöffnung verbunden werden kann. Dabei kann das Halteelement abschnittsweise aus einem Polymer, aus einem Elastomer, aus einem Thermoplast, und/oder aus einem thermoplastischen Elastomer und/oder aus einem Metall aufgebaut sein.

Weiterhin kann das Befestigungselement zumindest abschnittsweise eine Oberflächenbeschichtung aufweisen, die zumindest abschnittsweise aus einem Elastomer, einem Thermoplast und/oder einem thermoplastischen Elastomer besteht. Mittels einer derartigen Oberflächenbeschichtung kann vorteilhaft beispielsweise eine Abdichtung der Gehäuseöffnung erreicht werden, in der das Befestigungselement eingesetzt wird.

Somit kann vorteilhaft bei einer zweikomponentigen Aufbauweise des Befestigungselementes beispielsweise die Oberflächenbeschichtung eine dichtende Funktion übernehmen, während das Halteelement die Befestigungsfunktion des Befestigungselementes in der Gehäuseöffnung übernimmt.

Das als offenporiges Element ausgestaltete Druckausgleichselement ist vorteilhaft aus Fasern aufgebaut.

Des Weiteren weist das offenporige Element zumindest einen Vliesstoff auf. Dabei kann der Vliesstoff zumindest abschnittsweise aus einem Nassvlies aufgebaut sein, zumindest abschnittsweise aus einem gesponnenen Mikrofaser-Vlies und/oder zumindest abschnittsweise aus einem trocken gelegten Mikrofaser-Vlies. Ebenso ist es denkbar, dass der Vliesstoff zumindest abschnittsweise durch eine Fluorcarbonisierung ausgerüstet ist.

Vorteilhaft kann durch die Verwendung von Vliesstoffen aufgrund des Faseraufbaues des Vliesstoffes eine hohe mechanische Festigkeit des offenporigen Elementes, insbesondere gegenüber Penetration bzw. Rissausbreitung nach der Penetration erreicht werden. Des Weiteren kann vorteilhaft aufgrund des Faser-Labyrinth-Aufbaus das offenporige Element auch als Ausbreitungsverhinderer für Feuer wirken. Diese Wirkung kann sowohl für Brände infrage kommen, die von außen anstehen, als auch für solche, welche im Gehäuseinnenraum auftreten.

In jedem Fall trägt die Atmungsaktivität des offenporigen Elementes dazu bei, dass die Druckunterschiede aufgrund der unterschiedlichen Temperaturen zwischen dem Gehäuseinnenraum und dem umgebenden Außenraum ausgeglichen werden können, sodass die Gefahr einer Deformation des Gehäuses zumindest vermindert werden kann. Des Weiteren kann vorteilhaft aufgrund der Verwendung von Vliesstoffen ein nachträgliches Recyceln des Gehäuses mit einer derartigen Druckausgleichsvorrichtung erleichtert werden, da man Vliesstoffe aus nahezu allen gängigen Materialien herstellen kann. Demzufolge kann das Material des Vliesstoffes auf das Material des Gehäuses oder auch auf andere Komponenten hinsichtlich einer nachfolgenden Wiederverwertung abgestimmt werden.

Unter einem Vliesstoff ist ein textiles Flächengebilde aus einzelnen Fasern zu verstehen. Vliesstoffe sind zu unterscheiden von Geweben, Gestricken und Gewirken, die aus Garnen hergestellt sind und von Membranen, die aus Folien gebildet werden. Im Gegensatz zu den aus Garnen hergestellten Geweben, Gestricken und Gewirken, die sich durch eine Anordnung der einzelnen Fasern oder Fäden gemäß des jeweiligen Herstellungsverfahrens auszeichnen, lässt sich die Lage der Fasern bei Vliesstoffen nur mit Methoden der Statistik beschreiben.

Dabei liegen die Fasern in einem Vliesstoff wirr zueinander, können aber, je nach Herstellungsverfahren, definiert in einer Vorzugsrichtung abgelegt werden oder gänzlich stochastisch verteilt sein. Vliesstoffe können aufgrund des verwendeten Fasermaterials, dem Bindungsverfahren, der Faserart, der Faserfeinheit und der Faserorientierung unterschieden werden. Vorteilhaft für die Verwendung von Vliesstoffen ist deren Homogenität als auch die Möglichkeit der Oberflächenbehandlung, bevorzugt wenn die zum Stoffaustausch verwendeten Querschnittsflächen der verwendeten Vliesstoffe im Bereich von weniger als 10 cm² oder sogar unter 1 cm² liegen.

Vorteilhaft ist demzufolge die Verwendung von Vliesstoffen, die nach dem Nassvliesverfahren, dem Meltblown-Verfahren oder einem Nass-, Spinn- oder Trockenlegeverfahren hergestellt sind. Zudem ist eine mechanische Behandlung in einem zweiten Arbeitsschritt und ggf. eine damit einhergehende Aufsplittung der Fasern ebenfalls vorteilhaft. Vorzugsweise können Vliesstoffe verwendet werden, die über eine Dicke des Materials von mindestens 10 Faserlagen verfügen. Dabei kann der Tiefenaufbau gleichmäßig oder unterschiedlich, insbesondere graduell aufgebaut sein.

Denkbar ist ebenfalls eine Verwendung von mehreren Lagen, wobei die Vliesbeschaffenheit der jeweiligen Lagen zueinander unterschiedlich beschaffen sein kann. Die Verfestigung der Vliesstoffe kann mechanisch, beispielsweise durch Wasserstrahl-Verfestigung oderVernadelung, erfolgen, thermisch und/ oder auch unter Verwendung von Bindehilfsmitteln. Ist zudem die Oberfläche des Vliesstoffes gegenüber der Umgebung offen liegend, so ist es vorteilhaft, wenn die Fasern beispielsweise unter Zuhilfenahme eines Verfestigungsverfahrens gut in den Faserverbund eingebunden sind.

Als Fasermaterialien können Polymere wie Polyester, beispielsweise Polyethylenterephthalat und Polybuthylenterephthalat, auf natürliche Rohstoffe basierende Polyester, beispielsweise Polymilchsäure, Polyamide, Polyoxyalkylene und/oder Polyolefine zum Einsatz kommen. Dabei können die Fasern in den Vliesstoffen sortenrein oder auch aus unterschiedlichen Materialien hergestellt sein, sowie unterschiedliche Fasertypen aufweisen. Denkbar ist darüber hinaus auch die Verwendung von anorganischen Fasermaterialien wie beispielsweise Grafit oder Silikaten. Dies ist beispielsweise dann vorteilhaft, wenn das Material dauerhaft Temperaturen deutlich über 200 °C ausgesetzt sein kann, wie das beilspielsweise bei chemischen Reaktoren möglich ist. Zudem kann durch die Verwendung von derartigen anorganischen Fasermaterialien auch eine kurzfristig noch deutlich höhere Temperatur als 200 °C zerstörungsfrei überstanden werden. Solche Temperaturen können beispielsweise bei Brennstoffzellen oder bei einem schweren Störfall der Komponenten im Gehäuse, z.B. der Zellen einer Batterie, auftreten, wenn heiße, gasförmige Abbauprodukte aus dem Zellinneren ausgeblasen werden. In diesem Fall kann bei dementsprechend naher Anordnung der Druckausgleichsvorrichtung an dem Störungsherd ein ggf. zu wenig abgekühlter Gasstrom ein polymeres Vliesmaterial schmelzen, wobei die Filterfunktion der Druckausgleichsvortichtung verloren gehen kann.

Zudem können die Fasern des Vliesstoffes bzw. der Vliesstoff mit einer dementsprechenden Oberflächenbeschichtung ausgerüstet sein. So ist es denkbar, den Vliesstoff metallisch auszurüsten. Dies ist insbesondere dann vorteilhaft, wenn eine elektromagnetische Abschirmung beispielsweise des Gehäuseinnenraumes gewünscht ist. Dabei kann eine Metallisierung von Vliesstoffen beispielsweise durch Sputter-Abscheidungsprozesse, die zu dünnen Schichten und einer relativ geringen elektromagnetischen Äbschwächungsfahigkeit führen, oder durch galvanische Prozesse, die zu dicken Schichten einer relativ hohen elektromagnetischen Abschwächungsfähigkeit führen, erfolgen.

Des Weiteren Ist eine Ausrüstung von Vliesstoffen mittels einer Fluorcarbon-Behandlung, auch als Fluorcarbonisierung bezeichnet, vorteilhaft. Dabei werden die Vliesstoffe einer flüssigen oder auch gasförmigen Fluorcarbon-Umgebung ausgesetzt und die Fluorcarbone anschließend thermisch auf den Vliesstoffen fixiert. Die Fluorcarbone können dabei als Lösung oder auch als Emulsion bzw. als Dispersion vorliegen. Bei einer Auftragung aus der Lösung sind Verfahren wie Imprägnierung, Foulardierung, Rakeln denkbar, sowie ein Sprühauftrag.

Dabei versteht man unter Fluorcarbonen eine Gruppe von Materialien, die als wichtigste Gemeinsamkeit eine wasserabweisende, hydrophobe Eigenschaft haben. Als weitere Gemeinsamkeit können diese Substanzen perfluorierte Kohlenstoffketten aufweisen, dies ist aber nicht zwingend. Letztendlich wird durch Fluorcarbone eine Gruppe von Materialen bezeichnet, die In bestimmten industriellen Bereichen, beispielsweise in der Textilherstellung, zum Aufbau eines wasserabweisenden Charakters von beispielsweise Vliesstoffen herangezogen werden. Unter Fluorcarbonen ist demzufolge nicht eine bestimmte chemische Stoffgruppe zu verstehen.

Dabei können die Fluorcarbone in einer Auftragsmenge von 300 mg/m² bis 30 g/m², 200 mg/m² bis 30 g/m² auf den Vliesstoff aufgetragen sein. Ebenfalls denkbar ist eine Auftragsmenge von 300 mg/m² bis 25 glm², insbesondere von 300 mg/m² bis 20 g/m² und ggf. von 300 mg/m² bis 10 g/m².

Ebenfalls denkbar sind Oberflächenbehandlungen durch Polyurethan- oder auch Silikon-Beschichtungen, die auch zu einer wasserabstoßenden Funktion führen. Diese Beschichtungen haben gegenüber der Fluorcarbon-Behandlung den Vorteil geringerer Kosten, bieten in der Regel aber nicht eine gleichzeitige Öl- und Wasser abstoßende Wirkung.

Denkbar ist auch die Verwendung von Vliesstoffen enthaltend Aktivkohle. Solche Materialien werden als Filter in Automobil-Innenfiltern eingesetzt (z.B. "Micronair" der Fa. Freudenberg Filtration Technologies). Hierbei wird beispielsweise die Aktivkohle in Partikelform mit Hilfe von Bindern bzw. thermisch angebunden auf eine Vliesstoff-Oberfläche bzw. zwischen zwei Vliesstoff-Lagen platziert. Die zusätzliche Platzierung einer solchen Lage aus Vliesstoff hat den Vorteil, dass auch eintretende Öle in Dampfform bzw. saure Gase, die den Innenraum der Batterie korrosiv schädigen könnten, zurückgehalten werden können.

Des Weiteren kann das offenporige Element fest mit dem Befestigungselement, dem Gehäuse oder einem Stabilisierungselement durch Verkleben, Vulkanisieren, Verschweißen, Zusammenheften oder dgl. verbunden sein. Bei einer derartigen festen Verbindung des offenporigen Elementes mit dem Befestigungselement, dem Gehäuse oder einem Stabilisierungselement ist ein ungewolltes Ablösen des offenporigen Elementes vorteilhaft erschwert, sodass die Filterfunktion des offenporigen Elementes auch nach längerer Gebrauchszeit gewährleistet werden kann. Dabei kann eine derartige irreversible Befestigung bei Anwendungen sinnvoll sein, bei denen die Kontaminationsbelastung im Vergleich zur Kontaminationsaufnahmekapazität gering ist, oder bei der ein Tausch des offenporigen Elementes nicht gewünscht bzw. nicht notwendig ist.

Weiterhin kann das offenporige Element auch zerstörungsfrei von dem Befestigungselement, dem Gehäuse oder einem Stabilisierungselement lösbar mit jeweilig demselben durch beispielsweise Verrasten, Verclipsen, Verspannen oder dgl. verbunden sein. Vorteilhaft an dieser reversiblen Befestigung ist die Austauschbarkeit des offenporigen Elementes, während der nachfolgenden Gebrauchszeit. Dabei kann das offenporige Element selbst wieder in eine Art Rahmen oder dgl. integriert sein, die wiederum mit dem Befestigungselement oder dem Gehäuse verklemmt, verklebt, verspannt, verpresst oder dgl. werden kann.

Demzufolge können dem offenporigen Element wiederum selbst zwei Komponenten zugeordnet sein, beispielsweise eine ringförmige Dichtung oder ein Kunststoff-/Metallring, in dessen Öffnung das offenporige Element angeordnet ist. Auch die Verbindung zwischen diesen beiden Komponenten kann chemisch, thermisch oder mechanisch erfolgen. Eine derartige Ausbildung ist besonders bevorzugt, da aufgrund dieser zweikomponentigen Bauweise ein leicht zu handhabendes Bauteil erzeugbar ist, das einfach ausgetauscht werden kann.

Weiterhin kann das offenporige Element derartig angeordnet sein, dass eine Strömungsrichtung des das offenporige Element durchströmenden Gases parallel und/ oder nicht-parallel zur Stapelrichtung des offenporigen Elementes orientiert ist.

Dabei versteht man unter einer Stapelrichtung diejenige Richtung, beispielsweise im Falle eines Vliesstoffes, in der die Fasern während der Herstellung abgelegt worden sind oder im Falle einer mehrlagigen Ausbildung, in der die einzelnen Lagen aufeinander gestapelt sind.

Üblicherweise werden die offenporigen Elemente derart insbesondere in Gehäuseöffnungen eingesetzt, dass die Strömungsrichtung des durchströmenden Gases parallel zur Lagenrichtung orientiert ist. Es ist aber auch denkbar, das offenporige Element derart anzuordnen, dass die Durchströmungsrichtung nicht-parallel und insbesondere sogar senkrecht zur Lagenrichtung ist. Insbesondere bei der senkrechten Orientierung der Strömungsrichtung zur Stapelrichtung kann eine Durchströmungslänge erreicht werden, die zumindest fünfmal größer sein kann, als die Dicke des offenporigen Elementes in Stapelrichtung.

Denkbar sind demzufolge plattenförmige oder streifenförmige Ausbildungen des offenporigen Elementes. Dadurch wird es möglich, mehrere Lagen des offenporigen Elementes parallel anzuordnen, sodass ein schnellerer Druckausgleich über das offenporige Element ermöglicht wird. Im Falle sowohl einer parallelen als auch nicht-parallelen Ausrichtung der Durchströmungsrichtung zur Stapelrichtung ist die Verwendung eines gewickelten offenporigen Elementes denkbar. Dabei kann ein derart gewickeltes offenporiges Element derart angeordnet sein, dass die Strömungsrichtung axial oder senkrecht zur Wicklung erfolgt.

Im Falle einer axialen Durchströmung des gewickelten offenporigen Elementes kann in der Mitte des Wickels ein Stab platziert sein, der ein ggf. unerwünscht im Zentrum des Wickels auftretendes Loch vermeidet. Zudem kann durch Verwendung eines derartigen Stabes der Tausch des Wickels vereinfacht werden, wenn der Stab in Form einer Ausziehhilfe ausgebildet ist und ggf. teilweise aus dem Wickel heraussteht.

Des Weiteren ist es ebenfalls denkbar, das offenporige Element zumindest abschnittsweise außenseitig und/ oder zumindest abschnittsweise innenseitig durch zumindest ein Schutzelement abzudecken. Dabei kann das Schutzelement aus einem Metallsieb, einem Kunststoffsieb, einem Gewebe oder Netz, einer Lochplatte aus Metall oder Kunststoff oder einer offenporigen oder geschlossenen Schutzfolie bestehen.

Vorteilhaft kann durch die Verwendung zumindest eines Schutzelementes das offenporige Element gegenüber mechanischer Belastung geschützt werden. Somit ist bei Verwendung eines Schutzelementes eine schwächere Ausgestaltung des offenporigen Elementes gegenüber mechanischer Beanspruchung möglich. Zudem kann das zumindest eine Schutzelement auch als Halterung für das offenporige Element fungieren.

Wird als Schutzelement eine Schutzfolie über dem offenporigen Element positioniert, so kann diese Schutzfolie offenporig oder geschlossen ausgebildet sein. Im Falle einer geschlossenen Ausbildung kann diese Schutzfolie beispielsweise als Transportschutz dienen, die bei Inbetriebnahme des jeweiligen Gerätes abgezogen werden kann. Die Verwendung einer derartigen geschlossenen Schutzfolie kann beispielsweise auch bei bestimmten Hersteilungsprozessen von Vorteil sein, so ist es beispielsweise denkbar, dass nach Einbau des offenporigen Elementes aufgrund der Schutzfolie eine Lackierung möglich ist, ohne dass das offenporige Element durch diesen Herstellungsprozess beschädigt wird. Vorteilhaft können in diesem Fall selbstklebende Polymerfolien verwendet werden.

Ebenfalls denkbar ist es, dass die Schutzfolie in Segmente aufgeteilt ist, sodass sie segmentweise entfernt werden kann. Dadurch kann während des laufenden Betriebes des jeweiligen Gerätes in Abständen und bei Bedarf frische Querschnittsfläche freigegeben werden. Dies ist insbesondere bei besonders schmutzintensiven Applikationen vorteilhaft, da mittels einer derartigen Reaktivierung der Austausch des gesamten offenporigen Elementes hinausgezögert werden kann.

Des Weiteren ist ebenfalls eine offenporige Ausbildung der Schutzfolie denkbar, sodass auch während des Betriebes des offenporigen Elementes die Schutzfolie auf demselben verbleiben kann und demzufolge das offenporige Element durch die offenporige Schutzfolie vor grober Verschmutzung geschützt werden kann.

Insbesondere bei besonders hohen mechanischen Anforderungen kann das offenporige Element dauerhaft hinter einem Schutzelement positioniert sein. Dabei weist ein derartiges Schutzelement Poren bzw. Aussparungen auf, sodass durch das Schutzelement das ein- bzw. austretende Gas durchströmen kann.

Sind dabei die Schutzelemente zumindest teilweise aus metallischen bzw. leitfähigen Materialien oder sind die Schutzelemente zumindest teilweise leitfähig beschichtet, beispielsweise mittels Metallbedampfung, galvanisch oder In Mehrkomponentenbauweise durch Verwendung von metallischen Sieben, Lochplatten, Geweben, Netzen oder Vliesstoffen, so kann dadurch die elektromagnetische Verträglichkeit verbessert und das Austreten von elektromagnetischer Strahlung aus dem Gehäuse bzw. deren Eintreten in das Gehäuse weitestgehend verringert bzw. verhindert werden. Zudem kann durch diese Ausführung eine Erdung erzielt werden, was z.B. bei chemischen Reaktoren vorteilhaft sein kann.

Des Weiteren kann das offenporige Element auch integral mit einer Ventileinrichtung ausgebildet sein.

Aufgrund einer derartigen höheren Integration sind vorteilhaft weniger Bauteile notwendig, sodass die Herstellungskosten verringert werden können und zudem im Falle eines Austausches der Wartungsaufwand reduziert ist.

Dabei kann die mit dem offenporigen Element integrierte Ventileinrichtung die Druckausgleichsvorrichtung selbst darstellen. So ist es beispielsweise möglich, im Falle einer klappenartigen Ausbildung der Ventileinrichtung, dass das offenporige Element integral mit der Klappe bzw. dem Deckel der Ventileinrichtung ausgebildet ist. Vorteilhaft kann durch eine derartige Integration des offenporigen Elementes in die Ventileinrichtung eine Druckausgleichsvorrichtung bzw. eine Ventileinrichtung dargestellt werden, die bei geringen und/ oder langsamen Druckschwankungen, wie sie im "normalen" Betrieb auftreten, einen gewissen Druckausgleich zwischen Gehäuseinnenraum und umgebenden Außenraum zulässt, während im Störfall bei einem schnelleren und höheren Druckanstieg eine Öffnung der Ventileinrichtung eintritt und demzufolge ein schnellerer Druckausgleich des Gehäuseinnenraumes zum Außenraum stattfinden kann.

Vorteilhaft ist in dieser Ausführungsform nur eine Gehäuseöffnung für eine derartig integrierte Druckausgleichsvorrichtung bzw. Ventileinrichtung notwendig, da eine derartig integrale Ausbildung die Funktion des sanften, stetigen Druckausgleichs mit einer Ventilfunktion bei sprunghaftem Druckanstieg in sich vereint

Des Weiteren kann das offenporige Element auch integral mit einer Dichtungseinrichtung ausgebildet sein. Dabei kann die Dichtungseinrichtung auch ein Teil einer Ventileinrichtung darstellen.

Vorteilhaft kann in diesem Fall auf eine zusätzliche Gehäuseöffnung für die Druckausgleichsvorrichtung verzichtet werden, da ein Druckausgleich bei schwachen, langsamen Druckschwankungen über das offenporige Element der Dichtung ermöglicht ist. Als mögliche Dichtungseinrichtung käme beispielsweise die Gehäusedichtung des Gehäuses infrage. In diesem Fall ist vorteilhaft kein weiterer Montageschritt notwendig und die Dichtung ist üblicherweise dort platziert, wo wenig Kontamination auftritt. Dabei kann das offenporige Element abschnittsweise die Dichtungseinrichtung ersetzen oder komplett die Dichtungseinrichtung ausbilden.

Des Weiteren ist es ebenfalls denkbar, dass die Druckausgleichsvorrichtung über ein Leitungselement mit dem Gehäuse fluidisch leitend verbunden ist. Hierdurch ist ein Gasaustausch möglich. Demzufolge kann durch ein Leitungselement die Druckausgleichsvorrichtung von dem Gehäuse beabstandet ausgebildet sein.

Durch die Beabstandung ist vorteilhaft, eine geringere Nähe der Druckausgleichsvorrichtung zu dem Gehäuseinnenraum gegeben, sodass zum Einen die Druckausgleichsvorrichtung zu der evtl. auftretenden Störquelle beabstandet ist und demzufolge weniger stark durch Spritzen verschmutzt oder abgesprengte Bauteile beschädigt werden kann. Zum Anderen kann aufgrund der Leitung eine gewisse Abkühlung des Gasstromes bis zum Auftreffen auf die Druckausgleichsvorrichtung eintreten. Zudem kann vorteilhaft durch eine entfernte Positionierung der Druckausgleichsvorrichtung dieselbe derart positioniert werden, dass sie auch während des Normalbetriebes einer geringeren Kontamination im Vergleich zum Positionsbereich des Gehäuses ausgesetzt ist.

Demzufolge wird in einem weiteren Aspekt der Erfindung ein Gehäuse vorgeschlagen, das mit einer derartigen Druckausgleichsvorrichtung oder einem offenporigen Element, wie zuvor beschrieben, ausgestattet ist.

Weiterhin wird in weiterführenden Aspekten der Erfindung vorgeschlagen, elektrochemische Energiequellen, wie beispielsweise Batterien, Superkondensatoren oder Brennstoffzellen, deren Gehäuse, Batteriezellen, die mit der Umgebung im stofflichen Austausch stehen, insbesondere "Metall-Luft-Zellen", Batterietransportbehälter sowie Transportbehälter für elektrochemische Speichersysteme, elektrische Gehäuse, wie beispielsweise Waddlersysteme, Gleichrichter oder dgl., Schaltschränke, chemische Reaktoren, sowie biologische oder biochemische Reaktoren und Elektromotoren mit den zuvor beschriebenen Druckausgleichsvorrichtungen auszustatten.

Als weiterer Aspekt der Erfindung wird die Verwendung von zumindest einem offenporigen Element als Druckausgleichselement bei elektrochemischen Stromquellen, wie Doppelschichtkondensatoren, Batterien oder Brennstoffzellen, bei Gehäusen derselben, bei Transportbehältern für elektrochemische Stromquellen, bei Gehäusen für elektrische Bauelemente, wie Wandler oder Gleichrichter, bei Schaltschränken, bei chemischen, biochemischen oder biologischen Reaktoren oder bei Elektromotoren vorgeschlagen.

Vorteilhaft kann durch Einsatz zumindest eines offenporigen Elementes in den zuvor genannten Vorrichtungen ein kontrollierter Druckausgleich zwischen einem Gehäuseinnenraum und einem umgebenden Außenraum bei Druck- und Temperaturschwankungen erreicht werden, wobei durch das offenporige Element ein Eindringen von lipophilen Flüssigkeiten und/ oder Wasser in den Gehäuseinnenraum vermieden bzw. verhindert werden kann.

Dabei kann das offenporige Element lipophob und/oder hydrophob ausgebildet sein. Demzufolge ergeben sich die schon zuvor genannten Vorteile.

### Kurzbeschreibung der Zeichnung

Es zeigen, jeweils schematisch:
- Fig. 1: Ein Gehäuse mit einer Druckausgleichsvorrichtung,
- Fig. 2A-F: mehrere Varianten einer in eine Gehäusewand integrierten Druckausgleichsvortichtung,
- Fig. 3A-H: mehrere Varianten eines Befestigungselementes mit einem offenporigen Element,
- Fig. 4A-D: mehrere mögliche Anordnungen des offenporigen Elementes zur Strömungsrichtung des durchströmenden Gases,
- Fig. 5A-D: mehrere mögliche integrale Ausbildungen eines offenporigen Elementes mit einer Dichteinrichtung, und
- Fig. 6A, B: mehrere mögliche integrale Ausbildungen des offenporigen Elementes mit einer Ventileinrichtung.

### Ausführung der Erfindung

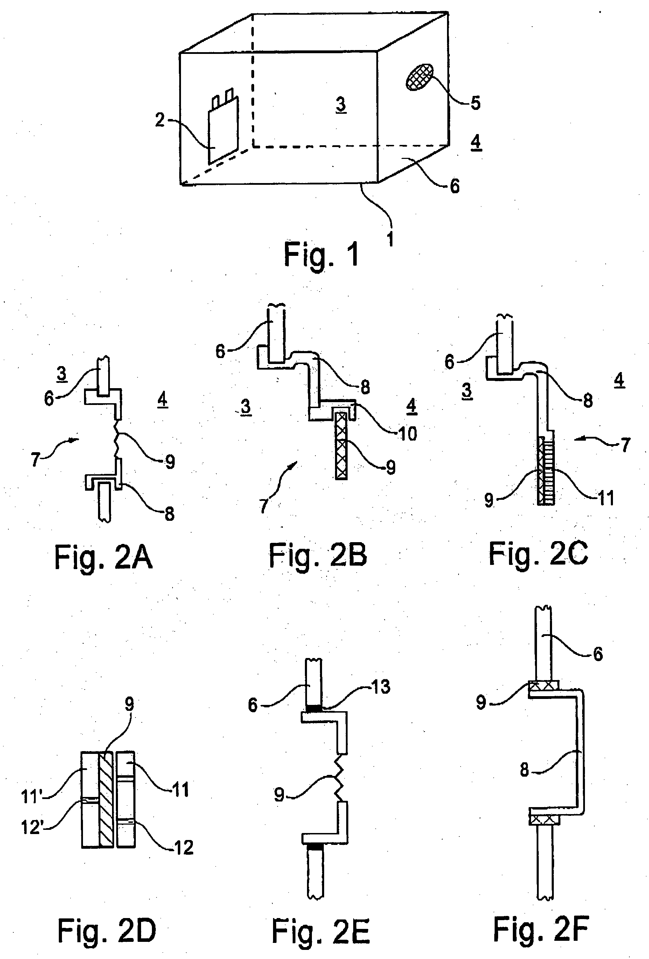

Wie in Fig. 1 dargestellt kann ein Gehäuse 1 einer Batterie oder einer elektrochemischen Stromquelle mehrere Zellen 2, beispielsweise Batterien, Superkondensatoren oder auch Brennstoffzellen, aufweisen. Dabei umschließt das Gehäuse 1 einen Gehäuseinnenraum 3 und grenzt denselben von einem das Gehäuse umgebenden Außenraum 4 ab. In dem Gehäuse 1 ist eine Gehäuseöffnung 5 angeordnet, die eine Gehäusewand 6 des Gehäuses 1 durchsetzt und einen Volumenaustausch zwischen dem Gehäuseinnenraum 3 und dem Außenraum 4 über die Gehäuseöffnung 5 ermöglicht.

In die Gehäuseöffnung 5, wie in Fig. 2A gezeigt, kann eine Druckausgleichsvorrichtung 7 eingesetzt werden. Dabei kann die Druckausgleichsvorrichtung 7 ein Befestigungselement 8 und ein offenporiges Element 9 umfassen. Das Befestigungselement 8 kann dabei, wie im oberen Teil der Fig. 2A gezeigt, mit der Gehäusewand 6 fest verbunden sein oder, wie im unteren Teil der Fig. 2A gezeigt, mit der Gehäusewand 6 verrastet bzw. verclipst sein.

Gemäß Fig. 2B kann das Befestigungselement 8 auch mit einem Halteelement 10 in Art eines Verrast-/ Verclipselementes ausgestattet sein, in das das offenporige Element 9 eingerastet oder eingeclipst werden kann. In einer derartigen in Fig. 2B gezeigten Ausführungsform ist das offenporige Element 9 reversibel bzw. austauschbar mit dem Befestigungselement 8 verbunden.

Die Druckausgleichsvorrichtung 7, wie In Fig. 2C gezeigt, weist zudem ein Schutzelement 11 auf, das das offenporige Element 9 zumindest abschnittsweise außenseitig und somit gegenüber dem Außenraum 4 abdeckt und schützt.

Wie in Fig. 2D gezeigt, ist es denkbar, ein derartiges Schutzelement 11' auch innenseitig und somit gegenüber dem Gehäuseinnenraum 3 schützend vor dem offenporigen Element 9 anzuordnen. Dabei weist das jeweilige Schutzelement 11, 11' zumindest eine Aussparung bzw. ein Loch 12, 12' auf. Bei einer innenseitigen und außenseitigen Anordnung von Schutzelementen 11, 11' ist es möglich, die außenseitigen Aussparungen 12 gegenüber den innenseitigen Aussparungen 12' versetzt anzuordnen. Durch eine derartige versetzte Anordnung der Aussparungen 12, 12' kann der Weg des Gases durch das offenporige Element 9 verlängert werden, wodurch die Filtereffzienz der Druckausgleichsvorrichtung 7 verbessert werden kann.

Wie in Fig. 2E dargestellt, kann zwischen der Gehäusewand 6 und der Druckausgleichsvorrichtung 7 eine Dichtungseinrichtung 13 angeordnet sein. In diesem Fall kann das offenporige Element 9 in dem Befestigungselement 8 positioniert sein.

Es ist jedoch auch denkbar, gemäß Fig. 2F, zwischen dem Befestigungselement 8 und der Gehäusewand 6 das offenporige Element 9 anzuordnen, sodass ggf. das Befestigungselement 8 kein zusätzlich eingesetztes offenporiges Element 9 aufweist.

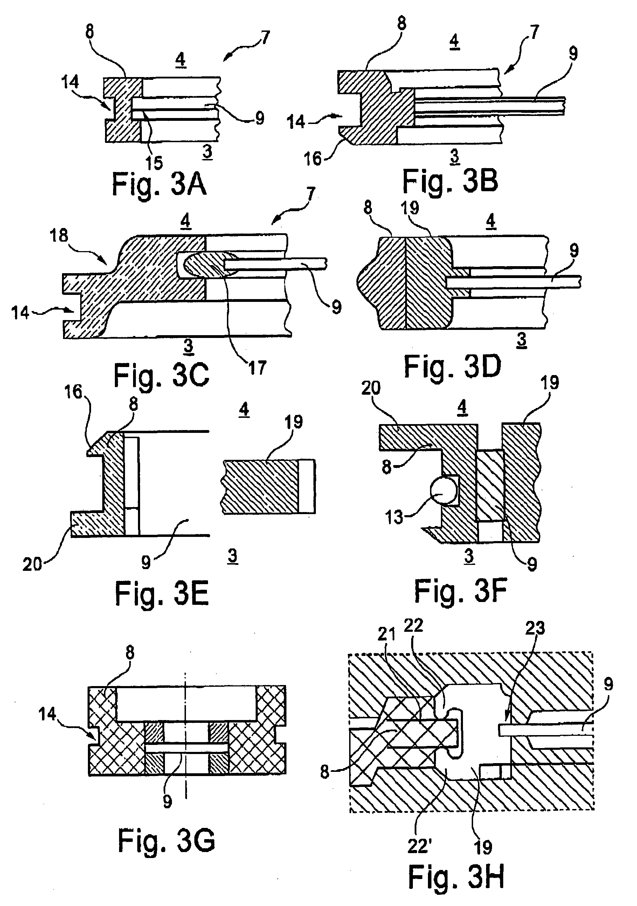

Die Fig. 3A zeigt eine Druckausgleichsvorrichtung 7. umfassend ein Befestigungselement 8 und ein offenporiges Element 9. Dabei kann das Befestigungselement 8 in Form eines Ringes aufgebaut sein, der eine Außennut 14 und eine Innennut 15 aufweist. In die Innennut 15 kann das offenporigen Element 9 eingesetzt sein, während mit der Außennut 14 das Befestigungselement 8 z. B. in eine Gehäuseöffnung 5 einer Gehäusewand 6 eingesetzt werden kann. Bevorzugt ist dabei das Befestigungselement 8 als Elastomer, thermoplastisches Elastomer oder Thermoplast ausgebildet. Die Befestigung des offenporigen Elementes 9 in dem Befestigungselement 8 ist bevorzugt permanent durch Verklebung, Verschweißung, Vulkanisieren oder dgl. an dem Befestigungselement 8 vorgenommen.

Wie in Fig. 3B gezeigt, kann ggf. auch auf die Innennut 15 verzichtet werden, sodass das offenporige Element 9 durch Verklemmen oder Verspannen In das Befestigungselement 8 eingesetzt werden kann. Zudem kann das Befestigungselement 8 eine Abkantung 16 aufweisen, mit dem das Befestigungselement 8 vereinfacht in eine Gehäuseöffnung 5 eingeführt werden kann.

Des Weiteren ist, wie in Fig. 3C gezeigt, eine Fixierung des offenporigen Elementes 9 in dem Befestigungselement 8 bzw. dessen Innennut 15 mittels eines Fixierelementes 17 denkbar. Dabei kann das Fixierelement aus Klebstoff, einem Elastomer aus einer Kitt- oder Knetmasse oder dgl. bestehen und ggf. ringförmig ausgebildet sein. Zudem kann das Befestigungselement 8 mit einem Steg 18 ausgestattet sein, der aufgrund seiner Flexibilität bzw. Elastizität das Einsetzen des Befestigungselementes 8 in die Gehäuseöffnung 5 erleichtert.

Weiterhin kann das offenporige Element 9, wie in Fig. 3D dargestellt, ein Stabilisierungselement 19 aufweisen und mit demselben lösbar oder fest verbunden sein. In einer derartigen Ausführungsform ist das offenporige Element 9 mit seinem Stabilisierungselement 19 in das Befestigungselement 8 leicht einsetzbar und einfach austauschbar.

Das Stabilisierungselement 19 kann, wie in Fig. 3E gezeigt, auch mittig angeordnet sein und von dem offenporigen Element 9 umgeben sein, und in das Befestigungselement 8 so einsetzbar sein, dass das offenporige Element 9 zwischen dem Befestigungselement 8 und dem Stabilislerungselement 19 angeordnet ist.

Wie in Fig. 3F gezeigt, kann zudem in dem Befestigungselement 8 noch eine Dichtungseinrichtung 13 angeordnet sein, mit der das eingesetzte Befestigungselement 8 in Einbaulage gegenüber der Gehäusewand 6 abgedichtet werden kann. Zudem kann das Befestigungselement 8 mit einem Anschlag 20 ausgestattet sein, sodass ein versehentliches zu weites Eindrücken des Befestigungselementes 8 in die Gehäuseöffnung 5 bis hin zu einem Durchdrücken des Befestigungselementes 8 vermieden werden kann.

Fig. 3G zeigt einen Querschnitt durch ein Befestigungselement 8 mit einem eingesetzten offenporigen Element 9.

Ebenfalls denkbar ist, wie in Fig. 3H gezeigt, ein Befestigungselement 8, das einen innenseitig angeordneten Ringsteg 21 aufweist. Auf diesen Ringsteg 21 kann ein offenporiges Element 9, das ein Stabilisierungselement 19 aufweist, aufgesetzt werden. Zu diesem Zweck weist das Stabilisierungselement 19 zwei Dichtlippen 22, 22' auf, die in Einbaulage den Ringsteg 21 umgreifen und so zum Einen das offenporige Element 9 fixieren und zum Anderen das offenporige Element 9 gegenüber dem Befestigungselement 8 abdichten. Dabei kann das Stabilisierungselement 19 eine Innennut 23 aufweisen, in die das offenporige Element 9 eingesetzt werden kann.

Durch eine derartige Ausgestaltung des offenporigen Elementes 9 mit seinem Stabilisierungselement 19 ist eine einfache und bequeme Austauschbarkeit des offenporigen Elementes 9 gegenüber dem Befestigungselement 8 ermöglicht.

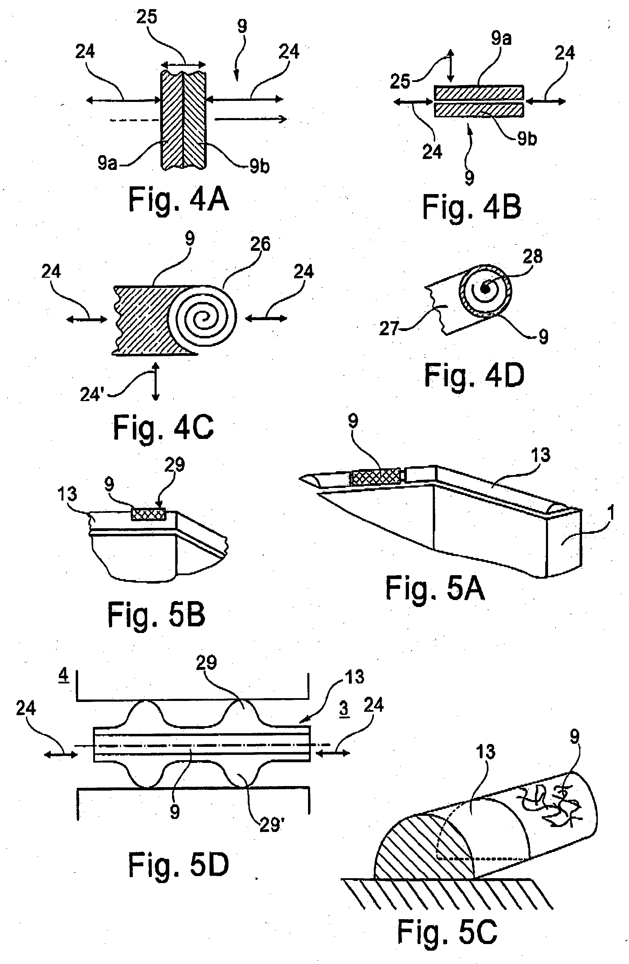

In Fig. 4A ist eine mögliche Anordnung des offenporigen Elementes 9 gegenüber einer Strömungsrichtung 24 des Gases durch das offenporige Element 9 dargestellt. In diesem Fall ist die Strömungsrichtung 24 parallel zu einer Stapelrichtung 26 angeordnet, in der die einzelnen Lagen 9a, 9b des offenporigen Elementes 9 gestapelt sind.

Fig. 4B zeigt eine Anordnung des offenporigen Elementes 9, bei dem die Strömungsrichtung 24 senkrecht zur Stapelrichtung 25 angeordnet ist.

Ebenfalls denkbar, wie in Fig. 4C gezeigt, ist die Ausgestaltung des offenporigen Elementes 9 als ein Wickel 26. Dabei kann ein derartiger Wickel 26 so angeordnet sein, dass die Strömungsrichtung 24 axial zu dem Wickel 26 orientiert ist. Ebenfalls ist es denkbar, dass die Strömungsrichtung 24' senkrecht zur Wicklung des Wickels 26 orientiert ist.

Gemäß Fig. 4D ist es denkbar, einen derartigen Wickel 26 in ein Rohr 27 einzubringen und ggf. mit einem Stab 28 im Zentrum des Wickels zu versehen, um ggf. auftretende Undichtigkeiten im Zentrum des Wickels 26 zu vermeiden. Zum Anderen kann der ggf. herausstehende Stab 28 auch als Demontagehilfe verwendet werden.

Wie in Fig. 5A gezeigt, kann das offenporige Element 9 auch integral mit einer Dichtungseinrichtung 13 ausgebildet sein. Dabei kann das offenporige Element 9 segmentweise in die Dichtungseinrichtung 13 eingesetzt sein, diese segmentweise ersetzen oder auch vollständig die gesamte Dichtungseinrichtung 13.

Gemäß Fig. 5B ist auch das Einsetzen eines derartigen offenporigen Elementes 9 in eine Aussparung 29 einer Dichtungseinrichtung 13 denkbar. Demzufolge befindet sich unterhalb des offenporigen Elementes 9 noch weiteres Material der Dichtungseinrichtung 13.

Fig. 5C verdeutlich einen nahtlosen Übergang der Dichtungseinrichtung 13 zu dem offenporigen Element 9 im Falle einer derartigen integralen Ausbildung.

Wie in Fig. 5D gezeigt, ist es ebenfalls denkbar, die Dichtungseinrichtung 13 so auszubilden, dass zwischen zwei Dichteschichten 29, 29' das offenporige Element 9 angeordnet ist.

Insoweit ist in den Figuren 5A bis 5D die Integration bzw. die Verwendung eines offenporigen Elements 9 in eine bzw. in einer Dichtungseinrichtung 13 dargestellt, die als Gehäusedichtung wirkt.

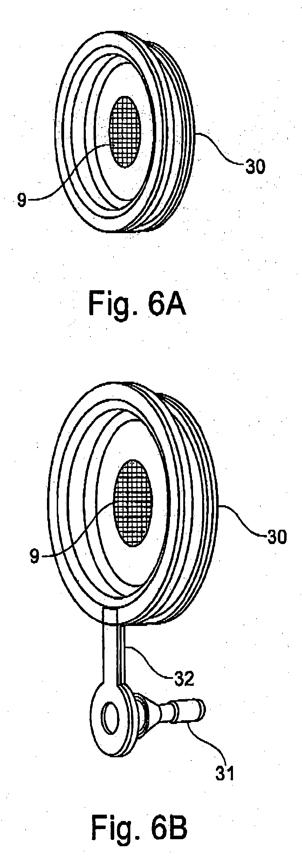

Wie in Fig. 6A gezeigt, ist es möglich, dass das offenporige Element 9 in einen Deckel 30, beispielsweise einer Ventileinrichtung, integriert ist. Dadurch kann eine weitere Gehäuseöffnung allein für eine Druckausgleichsvorrichtung 7 vermieden werden. Eine derartige integrale Ausbildung ermöglicht bei normalen Druckschwankungen von ca. maximal +/- 0,3 bar und langsamen Druckanstiegen bzw. Druckabfälle von beispielsweise 10 mbar/min einen Druckausgleich über das offenporige Element 9.

Bei evtl. auftretenden Störfällen, bei denen ein schnellerer Druckanstieg mit auch ggf. höheren Druckschwankungen zu erwarten Ist, kann die Ventileinrichtung vollständig öffnen und den dementsprechend größer auftretenden Druckanstieg gezielt ablassen.

Wie in Fig. 6B gezeigt, kann ein derartiger Deckel 30 zudem mit einem Befestigungselement 31 ausgestattet sein, mit dem der Deckel 30 auch nach Öffnen der Ventileinrichtung im Störfall im Bereich des Gehäuses 1 positioniert werden kann.

Dabei kann ein Überdruckventil in Form des in der Fig. 6A, B gezeigten Deckels 30 durch eine elastomere Verklemmung in der Gehäusewand 6 gehalten werden oder durch magnetische Haltekräfte sowie alternativ oder zusätzlich mittels federartigen Zuhaltekräften, beispielsweise durch den Steg 32.

Fig. 6B zeigt die Integration bzw. die Verwendung des offenporigen Elements 9 in ein bzw. in einem Überdruckventil.

### Beispiel 1:

### verwendbare Vliesstoffe

- FS 2190 ((Freudenberg Vliesstoffe KG); ein Polypropylen-Meltblown-Vliesstoff mit einem Flächengewicht von 43 g/m² und typischen Faserdurchmessem von 3 µm und mittleren Porengrößen von 10 µm.
- FFA 2037 (Freudenberg Filtration Technologies); ein thermisch gebundener Polyester-Nassvliesstoff aus PET / PBT Bikomponentenfasern mit Faserstärken von 10 µm und zusätzlichen PET-Feinfasem mit Faserstärken von 3 µm und mittleren Porengrößen von 20 µm.
- Evolon 100 (Freudenberg Evolon); ein Mikrofaser-Spinnvllesstoff aus Polyester und Polyamid, der durch anschließende Aufsplütung mittels Wasserstrahl-Behandlung Faserstärken von < 5 µm aufweist und mittlere Porengrößen von 25 µm besitzt.
- Y 0070 (Freudenberg Fuel Cell Component Technologies), ein Graphit-Faser-Vlies welches durch die Carbonisierung eines trockengelegten und Wasserstrahl-vortestigten PraOx-Vlies hergestellt und anschließend kalandriert wird. Die mittleren Porengrößen des Materials liegen bei 40 µm.

Vorteilhaft werden Vliesstoffe mit mittleren Porengrößen unterhalb 100 µm, besonders vorteilhaft unterhalb 50 µm verwendet. Dabei können zu kleine

Poren unter Umständen zu einer irreversiblen Kontamination mit Öl führen. Vorteilhaft sind daher Poren mit mittleren Porengrößen > 2 µm, besonders vorteilhaft > 5 µm.

### Beispiel 2:

### mögliche Ausrüstung der Vliesstoffe

Für die Nachbehandlung können die Vliese mittels einer Flourcarbonisierung modifiziert werden. Dabei werden die Vliesstoffe einer flüssigen oder auch gasförmigen Fluorcarbon-Umgebung ausgesetzt und die Fluorcarbone anschließend thermisch fixiert. Die Fluorcarbone können dabei als Lösung oder auch als Emulsion bzw. Dispersion vorliegen. Bei einer Auftragung aus der Lösung sind Verfahren wie Imprägnierung, beispielsweise Foulardierung oder Rakeln, denkbar oder auch eine Sprüh-Auftragung. Es können Auftragsmengen an Fluorcarbonen im Bereich von 0,5 bis 30 g/m² aufgetragen werden.

Die Vliesstoffe gemäß Tabelle 1 werden mit den Substanzen PM-3633 und PM-930 der Firma 3M, Deutschland versehen, wobei die Richtlinien des jeweiligen technischen Datenblattes zu befolgen sind. Die Vernetzungszeit beträgt 30 min bei 140 °C. So hergestellte Oberflächen weisen ein exzellentes oleophobes wie auch hydrophobes Verhalten auf.

**Tabelle 1: Benetzbarkeit gegenüber Wasser bzw. Öl**

| | Ohne Behandlung | | Nach Behandlung | |
|---|---|---|---|---|
| | Kontaktwinkel Wasser | Kontaktwinkel Öl | Kontaktwinkel Wasser | Kontaktwinkel Öl |
| FS 2190 | 80° | 0° | 120° | 120° |
| FFA 2037 | 40° | 0° | 120° | 130° |
| Evolon 130 | 0° | 0° | 120° | 110° |
| Y0070 | 130° | 20° | 130° | 120° |

| | | | | |
|---|---|---|---|---|
| *Kontaktwinkel-Messung nach 5 min "Einwirkzeit" des Tropfens. Ein Winkel von 0° bedeutet, dass die Flüssigkeit vollständig vom Vliesstoff aufgenommen wurde.* | | | | |

Dieselben Untersuchungen werden nach einer Lagerung der Materialien in heißem Öl von
a) 120 °C über 4 Wochen
b) 160 °C über 4 Wochen (mit Ausnahme des bei diesen Temperaturen nicht beständigen PP-Vlieses FS 2190)
wiederholt.

Trotz Lagerung ist keine Verschlechterung der "Phobie" und somit des Benetzungsverhaltens sowohl gegenüber öligen als auch wässrigen Medien zu beobachten.

Falls die gleichzeitige Einwirkung von lipophilen Flüssigkeiten und von Waser bei der Anwendung auf jeden Fall ausgeschlossen werden kann, kann der Viesstoff alternativ auch so behandelt werden, dass er nur das jeweils auftretende Medium abstößt.

So kann z.B. für eine Hydrophobierung eine Silikonisierung oder eine Polyurethan-Behandlung in Frage kommen. Steht nur Wasser von außen an, so kann bei Verwendung von Vliesstoffen bestehend aus Fasern mit hydrophoben Eigenschaften ggf, auf eine Nachbehandlung verzichtet werden (s. Tabelle 1; FS 2190 stößt lediglich Wasser ab). Hierbei ist allerdings zu beachten, dass Wasser, welches Netzmittel, beispielsweise waschaktive Substanzen, enthält den Vliesstoff durchdringen kann.

Denkbar ist auch, dass lediglich die nach außen gerichtete Lage eine abstoßende Eigenschaft aufweist. Dies ist z.B. dann vorteilhaft, wenn aus Stabilitätsgründen besonders dicke Vliesstoffe eingesetzt werden sollen und eine Beschichtung dieser dicken Vliesstoffe aufgrund technischen bzw. ökonomischen Gründen nicht sinnvoll ist. Hierbei ist es beispielsweise denkbar, einen Vliesstoff mit einer Dicke > 2 mm mit einer relativ dünnen, ausgerüsteten Vliesstoffschicht zu belegen.

### Beispiel 3:

### Resistenz/ Benetzbarkeit gegenüber Elektrolytlösung

Eine weitere vorteilhafte Eigenschaft ist das Verhalten der Materialien gegenüber flüssigen Elektrolytlösungen. Freie Elektrolytlösungen im Batteriegehäuse können beispielsweise bei Störfällen austreten bzw. auftreten. Demnach können Komponenten wie beispielsweise Dichtungen vorteilhaft so ausgestaltet sein, dass sie eine zumindest temporäre ausreichende Resistenz gegenüber diesen Elektrolytlösungen aufweisen. Im Falle von Li-Batterien werden üblicherweise stark polare organische Lösungsmittel wie Propylencarbonat, Diethylcarbonat oder auch Tetrahydrofuran verwendet, deren lonenleitfähigkeit durch Zusatz von Lithium-Salzen wie LiPF₆ erhöht wird.

Als Dichtungsmaterialien, die resistent gegenüber derartigen Medien sind und die demnach auch in Bereichen verwendet werden, die ständig mit derartigen Elektrolytlösungen in Kontakt kommen, beispielsweise in der Zelle selbst, können z.B. polyolefinische Kautschuke wie EPDM, SBR oder Fluorkautschuke (FKM) eingesetzt werden.

Für die zuvor beschriebenen offenporigen Elemente können alternativ zu den Dichtungsmaterialien auch Materialien eingesetzt werden, die bei einer Verwendung in der Zelle selbst beispielsweise eine zu starke Quellung aufweisen würden, wie das z.B. bei Nitrilkautschuk (NBR) der Fall ist.

Weitere verwendbare Materialien, die eine sehr hohe Resistenz gegenüber Li-Batterie-Elektrolyt aufweisen, sind beispielsweise Polyolefine (PE, PP) oder Polyester (PET, PBT). Es können darüber hinaus auch weitere gängige Polymere wie Polyamide oder dergleichen eingesetzt werden. Des Weiteren kann der jeweilige Vliesstoff auch dementsprechend ausgerüstet sein, um die Resistenz gegenüber Elektrolytlösungen zu verbessern.

Die Vliesstoffe Evolon 130 und FFA 2037, jeweils ausgerüstet mit PM-3633, werden mit einem Tropfen einer Elektrolytlösung enthaltend Propylencarbonat mit LiPF₆ belegt. Bei beiden Vliesstoffen wies der Tropfen einen anfänglichen Randwinkel von 60-70° auf. Im Falle des ausgerüsteten Evolon 130 ist der Tropfen nach 60 Minuten vollständig vom Vliesstoff aufgenommen. Im Falle des ausgerüsteten FFA 2037 ist der Tropfen nach 15 min vollständig in den Vliesstoff eingedrungen. Beide nicht-ausgerüstete Vliesstoffe nehmen dagegen den Tropfen nach weniger als 3 Sekunden auf. Eine chemische Veränderung / Zerstörung der Vliesstoffe tritt in keinem der Fälle auf.

Demnach können funktionalisierte Vliesstoffe eventuell austretenden Elektrolyten zumindest eine vorbestimmte Zeitspanne lang zurückhalten.

Zudem können die offenporigen Elemente an höher gelegenen Stellen im Batteriegehäuse positioniert werden.

### Beispiel 4:

Zur Klärung der Dimensionierung des Druckausgleichselementes wurde ein Volumen von 1.000 ml mit einem Überdruck von 0.1 bzw. 0.25 bar belegt. Durch Öffnung eines Ventils strömte das Volumen auf einen Deckel nach Fig. 6A zu, in welches runde atmungsaktive Elemente mit verschiedenen Durchmessern (2 mm; 4 mm und 8 mm; Material FFA 2037) eingebracht waren. Es wurde die Zeit bestimmt, bei der sich der Überdruck komplett abgebaut hatte.
- Bei einem Durchmesser von 8 mm war ein Überdruck von 0.1 bar bei Zeiten unterhalb 1 sec abgebaut; bei 0.25 bar betrug die Abklingzeit ca. 1.5 sec.
- Bei einem Durchmesser von 4 mm war ein Überdruck von 0.1 bar bei Zeiten um ca. 1.5 sec abgebaut; bei 0.25 bar betrug die Abklingzeit ca. 3 sec.
- Bei einem Durchmesser von 2 mm war ein Überdruck von 0.1 bar bei Zeiten um ca. 2.5 sec abgebaut; bei 0.25 bar betrug die Abklingzeit ca. 5 sec.

Diese Ergebnisse zeigen, dass aufgrund der hohen Luftdurchlässigkeit der Vliesstoffe bereits sehr kleine Querschnittsflächen für einen effektiven Luftaustausch und Druckausgleich ausreichen.

## Patentansprüche

1. Druckausgleichsvorrichtung (7) für ein ein Totvolumen aufweisendes Gehäuse (1), insbesondere einer elektrochemischen Stromquelle, mit zumindest einem offenporigen Element (9), welches einen mittleren Porendurchmesser von 2 bis 100 µm, bevorzugt von 5 bis 50 µm, aufweist,
**dadurch gekennzeichnet, dass** das offenporige Element (9) zumindest ein Element aus folgender Gruppe aufweist:
- einen Vliesstoff
- einen zumindest abschnittsweise aus einem Nassvlies aufgebauten Vliesstoff,
- einen zumindest abschnittsweise aus einem gesponnenen Mikrofaser Vlies aufgebauten Vliesstoff,
- einen zumindest abschnittsweise aus einem trocken gelegten Mikrofaser-Vlies aufgebauten Vliesstoff,
- einen zumindest abschnittsweise durch eine Fluorcarbonisierung, insbesondere mit Auftragsmengen von 300 mg/m² bis 30 g/m², ausgerüsteten Vliesstoff,
- einen zumindest abschnittsweise durch eine Polyurethan-Behandlung, insbesondere mit Auftragsmengen von 300 mg/m² bis 30 g/m², ausgerüsteten Vliesstoff,
- einen zumindest abschnittsweise durch eine Silikonisierung, insbesondere mit Auftragsmengen von 300 mg/m² bis 30 g/m², ausgerüsteten Vliesstoff.

2. Druckausgleichsvorrichtung nach Anspruch 1, **dadurch gekennzeichnet, dass** das offenporige Element (9) lipophob und/ oder hydrophob ausgebildet ist.

3. Druckausgleichsvorrichtung nach Anspruch 1 oder 2, **dadurch gekennzeichnet, dass** die Druckausgleichsvorrichtung (7) ein Befestigungselement (8) aufweist.

4. Druckausgleichsvorrichtung nach Anspruch 3, **dadurch gekennzeichnet, dass** das Befestigungselement (8) zumindest ein Element aus folgender Gruppe aufweist:
- ein zumindest abschnittsweise aus einem Polymer aufgebautes Halteelement (10),
- ein zumindest abschnittsweise aus einem Elastomer aufgebautes Halteelement (10),
- ein zumindest abschnittsweise aus einem Thermoplast aufgebautes Halteelement (10),
- ein zumindest abschnittsweise aus einem thermoplastischen Elastomer aufgebautes Halteelement (10),
- ein zumindest abschnittsweise aus einem Metall aufgebautes Halteelement (10),
- eine zumindest abschnittsweise aus einem Elastomer bestehende Oberflächenbeschichtung,
- eine zumindest abschnittsweise aus einem Thermoplast bestehende Oberflächenbeschichtung,
- eine zumindest abschnittsweise aus einem thermoplastischen Elastomer bestehende Oberflächenbeschichtung.

5. Druckausgleichsvorrichtung nach einem der Ansprüche **3 oder 4, dadurch gekennzeichnet, dass** das offenporige Element (9) fest mit dem Befestigungselement (8), dem Gehäuse (1) oder einem Stabilisierungselement (19) durch Verkleben, Vulkanisieren, Verschweißen oder dergleichen verbunden ist.

6. Druckausgleichsvorrichtung nach einem der Ansprüche 3 bis 5, **dadurch gekennzeichnet, dass** das offenporige Element (9) zerstörungsfrei von dem Befestigungselement (8), dem Gehäuse (1) oder einem Stabilisierungselement (19) lösbar mit jeweilig demselben durch Verrasten, Verclipsen, Verklemmen, Verspannen oder dergleichen verbunden ist.

7. Druckausgleichsvorrichtung nach einem der vorhergehenden Ansprüche, **dadurch gekennzeichnet, dass** eine Strömungsrichtung (24, 24'), in der das offenporige Element (9) von Gasen durchströmt wird, zumindest teilweise parallel und/ oder zumindest teilweise nichtparallel zu einer Stapelrichtung (25) des offenporigen Elementes (9) orientiert ist.

8. Druckausgleichsvorrichtung nach einem der vorhergehenden Ansprüche, **dadurch gekennzeichnet, dass** das offenporige Element (9) außenseitig und/ oder zumindest abschnittsweise innenseitig durch zumindest ein Schutzelement (11,11') abgedeckt ist, wobei das Schutzelement (11, 11') aus folgender Gruppe ausgewählt sein kann:
- ein Metallsieb,
- ein Kunststoffsieb,
- eine Lochplatte aus Metall oder Kunststoff,
- ein Gewebe aus Metall- oder Kunststofffasern,
- ein Netz aus Metall- oder Kunststofffasern
- ein Vliesstoff aus Metall- oder Kunststofffasem
- eine offenporige oder geschlossene Schutzfolie.

9. Druckausgleichsvorrichtung nach einem der vorhergehenden Ansprüche, **dadurch gekennzeichnet, dass** das offenporige Element (9) integral mit einer Ventileinrichtung ausgebildet ist.

10. Druckausgleichsvorrichtung nach einem der vorhergehenden Ansprüche, **dadurch gekennzeichnet, dass** das offenporige Element (9) integral mit einer Dichtungseinrichtung (13) ausgebildet ist.

11. Druckausgleichsvorrichtung nach einem der vorhergehenden Ansprüche, **dadurch gekennzeichnet, dass** die Druckausgleichsvorrichtung (7) über ein Leitungselement von dem Gehäuse (1) beabstandet und mit demselben fluidisch leitend verbunden ist.

12. Gehäuse mit zumindest einer Druckausgleichsvorrichtung (7) nach einem der vorhergehenden Ansprüche oder zumindest einem lipophoben und/ oder hydrophoben, offenporigen Element (9) wie in einem der vorhergehenden Ansprüche beschrieben.

## Claims

1. Pressure compensating device (7) for a housing (1) having a dead volume, in particular an electrochemical power source, with at least one open-pored element (9), which has an average pore diameter of from 2 to 100 µm, preferably from 5 to 50 µm, **characterized in that** the open-pored element (9) has at least one element from the following group:
- a nonwoven,
- a nonwoven made up at least partly of a wet-laid nonwoven,
- a nonwoven made up at least partly of a spunbonded microfibre nonwoven,
- a nonwoven made up at least partly of a dry-laid microfibre nonwoven,
- a nonwoven finished at least partly by a fluoro carbonization, in particular with application rates of from 300 mg/m² to 30 g/m²,
- a nonwoven finished at least partly by a polyurethane treatment, in particular with application rates of from 300 mg/m² to 30 g/m²,
- a nonwoven finished at least partly by a siliconization, in particular with application rates of from 300 mg/m² to 30 g/m².

2. Pressure compensating device according to Claim 1, **characterized in that** the open-pored element (9) is lipophobically and/or hydrophobically formed.

3. Pressure compensating device according to Claim 1 or 2, **characterized in that** the pressure compensating device (1) has a fastening element (8).

4. Pressure compensating device according to Claim 3, **characterized in that** the fastening element (8) has at least one element from the following group:
- a holding element (10) made up at least partly of a polymer,
- a holding element (10) made up at least partly of an elastomer,
- a holding element (10) made up at least partly of a thermoplastic,
- a holding element (10) made up at least partly of a thermoplastic elastomer,
- a holding element (10) made up at least partly of a metal,
- a surface coating consisting at least partly of an elastomer,
- a surface coating consisting at least partly of a thermoplastic,
- a surface coating consisting at least partly of a thermoplastic elastomer.

5. Pressure compensating device according to one of Claims 3 and 4, **characterized in that** the open-pored element (9) is fixedly connected to the fastening element (8), the housing (1) or a stabilizing element (19) by adhesive bonding, vulcanizing, welding or the like.

6. Pressure compensating device according to one of Claims 3 to 5, **characterized in that** the open-ported element (9) is connected to the fastening element (8), the housing (1) or a stabilizing element (19) in such a way that it can in each case be nondestructively released from the same, by locking, clipping, clamping, bracing or the like.

7. Pressure compensating device according to one of the preceding claims, **characterized in that** a flow direction (24, 24'), in which gasses flow through the open-pored element (9), is oriented at least partially parallel and/or at least partially non-parallel to a stacking direction (25) of the open-pored element (9).

8. Pressure compensating device according to one of the preceding claims, **characterized in that** the open-pored element (9) is covered on the outside and/or at least partly on the inside by at least one protective element (11, 11'), it being possible for the protective element (11, 11') to be chosen from the following group:
- a metal screen,
- a plastic screen,
- a perforated plate of metal or plastic,
- a woven fabric of metal or synthetic fibres,
- a network of metal or synthetic fibres,
- a nonwoven of metal or synthetic fibres,
- an open-pored or closed protective film

9. Pressure compensating device according to one of the preceding claims, **characterized in that** the open-pored element (9) is integrally formed with a valve device.

10. Pressure compensating device according to one of the preceding claims, **characterized in that** the open-pored element (9) is integrally formed with a sealing device (13).

11. Pressure compensating device according to one of the preceding claims, **characterized in that** the pressure compensating device (7) is kept at a distance from the housing (1) by means of a conducting element and is connected by the same to said housing in a fluidically conducting manner.

12. Housing with at least one pressure compensating device (7) according to one of the preceding claims or at least one lipophobic and/or hydrophobic, open-pored element (9) as described in one of the preceding claims.

## Revendications

1. Dispositif d'égalisation de pression (7) destiné à un boîtier (1) présentant un volume mort, notamment une source de courant électrochimique, comportant au moins un élément à pores ouverts (9) qui présente un diamètre moyen des pores de 2 à 100 µm, de préférence de 5 à 50 µm,
**caractérisé en ce que** l'élément à pores ouverts (9) comporte au moins un élément appartenant au groupe comprenant :
- un non-tissé,
- un non-tissé au moins partiellement constitué d'une nappe en voie humide,
- un non-tissé au moins partiellement constitué d'une nappe à microfibres filées,
- un non-tissé au moins partiellement constitué d'une nappe à microfibres déposées à sec,
- un non-tissé au moins partiellement renforcé par une fluorocarbonisation, notamment avec des quantités appliquées de 300 mg/m² à 30 g/m²,
- un non-tissé au moins partiellement renforcé par un traitement au polyuréthane, notamment avec des quantités appliquées de 300 mg/m² à 30 g/m²,
- un non-tissé au moins partiellement renforcé par siliconage, notamment avec des quantités appliquées de 300 mg/m² à 30 g/m².

2. Dispositif d'égalisation de pression selon la revendication 1, **caractérisé en ce que** l'élément à pores ouverts (9) est réalisé de manière à être lipophobe et/ou hydrophobe.

3. Dispositif d'égalisation de pression selon la revendication 1 ou 2, **caractérisé en ce que** le dispositif d'égalisation de pression (7) comporte un élément de fixation (8).

4. Dispositif d'égalisation de pression selon la revendication 3, **caractérisé en ce que** l'élément de fixation (8) comporte au moins un élément appartenant au groupe comprenant :
- un élément de maintien (10) constitué au moins partiellement d'un polymère,
- un élément de maintien (10) constitué au moins partiellement d'un élastomère,
- un élément de maintien (10) constitué au moins partiellement d'une matière thermoplastique,
- un élément de maintien (10) constitué au moins partiellement d'un élastomère thermoplastique,
- un élément de maintien (10) constitué au moins partiellement d'un métal,
- un revêtement de surface constitué au moins partiellement d'un élastomère,
- un revêtement de surface constitué au moins partiellement d'une matière thermoplastique,
- un revêtement de surface constitué au moins partiellement d'un élastomère thermoplastique.

5. Dispositif d'égalisation de pression selon la revendication 3 ou 4, **caractérisé en ce que** l'élément à pores ouverts (9) est relié de manière rigide à l'élément de fixation (8), au boîtier (1) ou à un élément de stabilisation (19) par collage, vulcanisation, soudage ou autre.

6. Dispositif d'égalisation de pression selon l'une quelconque des revendications 3 à 5, **caractérisé en ce que** l'élément à pores ouverts (9) est relié de manière à ne pas être endommagé par l'élément de fixation (8), par le boîtier (1) ou par un élément de stabilisation (19) et est respectivement relié de manière amovible à ces derniers par encliquetage, clipsage, blocage, serrage ou autre.

7. Dispositif d'égalisation de pression selon l'une quelconque des revendications précédentes, **caractérisé en ce que** la direction d'écoulement (24, 24') dans laquelle l'élément à pores ouverts (9) est traversé par un écoulement de gaz est orientée au moins partiellement parallèlement et/ou au moins partiellement non parallèlement à une direction d'empilement (25) de l'élément à pores ouverts (9).

8. Dispositif d'égalisation de pression selon l'une quelconque des revendications précédentes, **caractérisé en ce que** l'élément à pores ouverts (9) est recouvert sur sa face externe et/ou au moins par sections sur sa face interne par au moins un élément de protection (11, 11'), dans lequel l'élément de protection (11, 11') peut être sélectionné dans le groupe comprenant :
- un tamis métallique,
- un tamis en matière plastique,
- une plaque perforée constituée de métal ou de matière plastique,
- un tissu constitué de fibres métalliques ou en matière plastique,
- un filet constitué de fibres métalliques ou en matière plastique,
- un non-tissé constitué de fibres métalliques ou en matière plastique,
- une feuille de protection à pores ouverts ou une feuille de protection fermée.

9. Dispositif d'égalisation de pression selon l'une quelconque des revendications précédentes, **caractérisé en ce que** l'élément à pores ouverts (9) est réalisé de manière à faire partie intégrante d'un dispositif à soupape.

10. Dispositif d'égalisation de pression selon l'une quelconque des revendications précédentes, **caractérisé en ce que** l'élément à pores ouverts (9) est réalisé de manière à faire partie intégrante d'un dispositif d'étanchéité (13).

11. Dispositif d'égalisation de pression selon l'une quelconque des revendications précédentes, **caractérisé en ce que** le dispositif d'égalisation de pression (7) est espacé du boîtier (1) par un élément conducteur et est y relié de manière fluidiquement conductrice.

12. Boîtier comportant au moins un dispositif d'égalisation de pression (7) selon l'une quelconque des revendications précédentes ou au moins un élément à pores ouverts (9) lipophobe et/ou hydrophobe selon l'une quelconque des revendications précédentes.
